# EUROPEAN PATENT SPECIFICATION

(11) **EP 1 185 092 B1**
(45) Date of publication and mention of the grant of the patent: **01.03.2006**
(21) Application number: 01307144.4
(22) Date of filing: 22.08.2001
(51) Int. Cl.: H04N 5/445

(54) **Information processing and recording medium**
Informationsverarbeitung und Aufzeichnungsmedium
Traitement d'information et médium d'enregistrement

(30) Priority: 25.08.2000 JP 2000256252
(43) Date of publication of application: 06.03.2002
(73) Proprietor: SONY CORPORATION, Tokyo 141 (JP)
(72) Inventor: Wakahara, Tatsuya, c/o Sony Corporation, Tokyo 141 (JP)
(74) Representative: Pratt, Richard Wilson

(56) References cited:
- EP-A- 0 536 901
- EP-A- 0 697 789
- WO-A-00/05887
- WO-A-00/30350
- WO-A-00/40027
- WO-A-98/07277
- WO-A-98/38831
- US-A- 5 585 838
- US-A- 5 912 664
- US-A- 6 104 389

## Description

### BACKGROUND OF THE INVENTION

### 1. Field of the Invention

The present invention relates to information processing device and method, a computer program and a recording medium. Embodiments of the invention relate to an information processing device and method and a recording medium which are suitably used for a device for supplying an Electronic Program Guide (EPG).

### 2. Description of the Related Art

WO 98/07277 discloses an electronic program guide which displays current and future programs. Current programs are visually distinguished from future programs. The guide is updated regularly, for example every half hour.

WO 98/38831 discloses an electronic program guide which displays current and future programs. The guide displays current programs and future programs linearly from left to right. Elapse of current time is indicated by changing the appearance of the display linearly from left to right.

EP 0697789 discloses an electronic program guide which displays current and future programs.

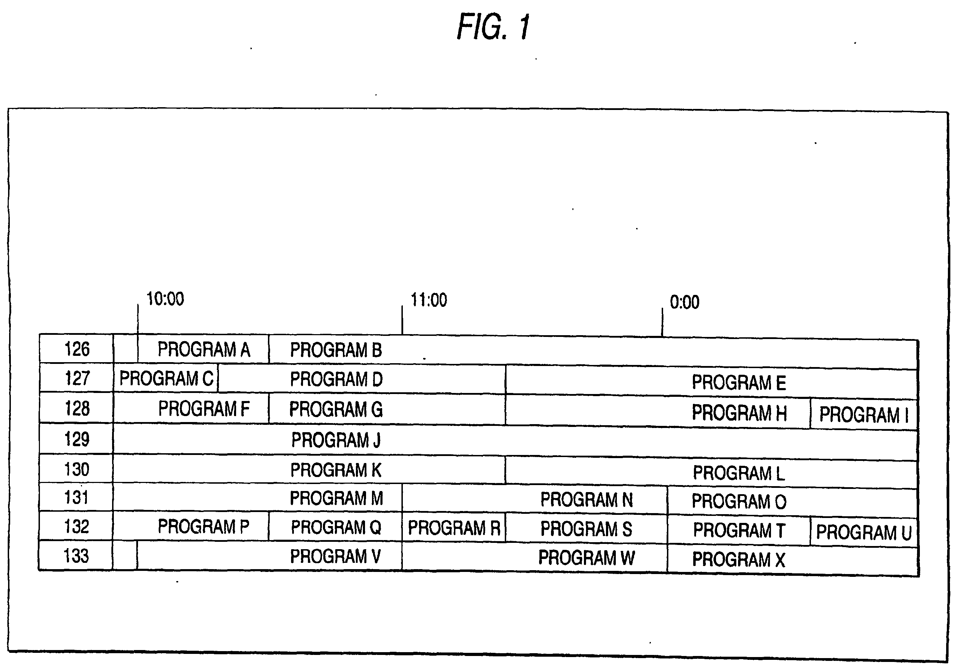

Recently, digital broadcast has been popular. In the digital broadcast, many channels exist, and many programs are distributed. Therefore, it is difficult for users to select (find out) programs which the users want to watch/listen to. Accordingly, a program table called as EPG (Electric Program Guide) is supplied (distributed) to the users as a method of enabling the users to easily select programs which the users want to watch/listen to. An example of EPG is shown in Fig. 1. As shown in Fig. 1, a program distributed every channel is displayed as being located at the time frame corresponding to the distribution time.

A user can select and watch/listen to or program to record a desired program from such an EPG.

As shown in Fig. 1, programs are display as a list in EPG. In such a display, when the number of programs increases, it may be difficult to select a desired program. Therefore, there is known an EPG in which programs are classified every category (for example, sport, and drama) and these programs are displayed with different colours in accordance with the above classification.

Further, in EPG shown in Fig. 1, programs being currently broadcasted, programs that have been already broadcasted and programs which will be broadcasted are displayed in mixture with one another. In addition, each program is different in broadcast time period, and thus different in the length between time frames to be displayed. In such a condition, the respective programs are displayed as being irregularly arranged as shown in Fig. 1, so that there may occur such a case that a program that has been already broadcasted is selected as a program which a user wants to watch/listen to, or recording of a program being currently broadcasted is programmed because a user misunderstands when it is broadcast. This could not be prevented even if the above programs are displayed with different colours among different categories.

In order to avoid this problem, the user must compare the current time and the broadcast time of a program to check whether a program which the user wants to watch/listen to is not a program that has been already broadcast and a program which the user wants to program to record is a program that will be broadcast, and thus conventional EPG is inconvenient for use.

### SUMMARY OF THE INVENTION

The present invention has an object to supply EPG in which a program being currently broadcasted, a program that has been already broadcast and a program that will be broadcast can be discriminated from one another at a glance.

An information processing device according to the present invention for controlling the display of an electronic program guide, is characterised in that a past program whose broadcast time is prior to a present time, a present program whose broadcast time contains the present time and a future program whose broadcast time is subsequent to the present time are controlled to be displayed with different colours and wherein if a user selects a past program, an indication is displayed that the program has been broadcast.

A program indicated by a user may be further displayed with a different colour.

An information processing method according to the present invention comprises a method of controlling the display of an electronic program guide, characterised in that a past program whose broadcast time is prior to a present time, a present program whose broadcast time contains the present time and a future program whose broadcast time is subsequent to the present time are controlled to be displayed with different colours, and in which if the user selects a past program, an indication is displayed that the program has been broadcast.

The present invention also provides a recording medium recorded with a computer-readable program for an information processing device for controlling the display of an electronic program guide, characterised in that a past program whose broadcast time is prior to a present time, a present program whose broadcast time contains the present time and a future program whose broadcast time is subsequent to the present time are controlled to be displayed with different colours and wherein if the user selects a past program, an indication is displayed that the program has been broadcast.

In the information processing device, the information processing method and the recording medium according to the present invention, a past program whose broadcast time is prior to a present time, a present program whose broadcast time contains the present time and a future program whose broadcast time is subsequent to the present time are controlled to be displayed with different colours and if the user selects a past program, an indication is displayed that the program has been broadcast. Accordingly, there can be prevented such a misoperation that a user erroneously instructs to watch/listen to a past program which has been already broadcasted or to program the recording of a past program.

### BRIEF DESCRIPTION OF THE DRAWINGS

For a better understanding of the present invention, reference will now be made by way of example to the accompanying drawings in which:
Fig. 1 is a diagram showing an example of conventional EPG;
Fig 2 is a diagram showing the construction of an embodiment of a receiver to which the present invention is applied;
Fig. 3 is a flowchart showing the operation of the receiver 10;
Fig. 4 is a diagram showing a display example of EPG displayed in step S1; and
Fig. 5 is a diagram showing a medium.

### DETAILED DESCRIPTION OF THE EMBODIMENT

An illustrative embodiment of the present invention will be described with reference to the accompanying drawings.

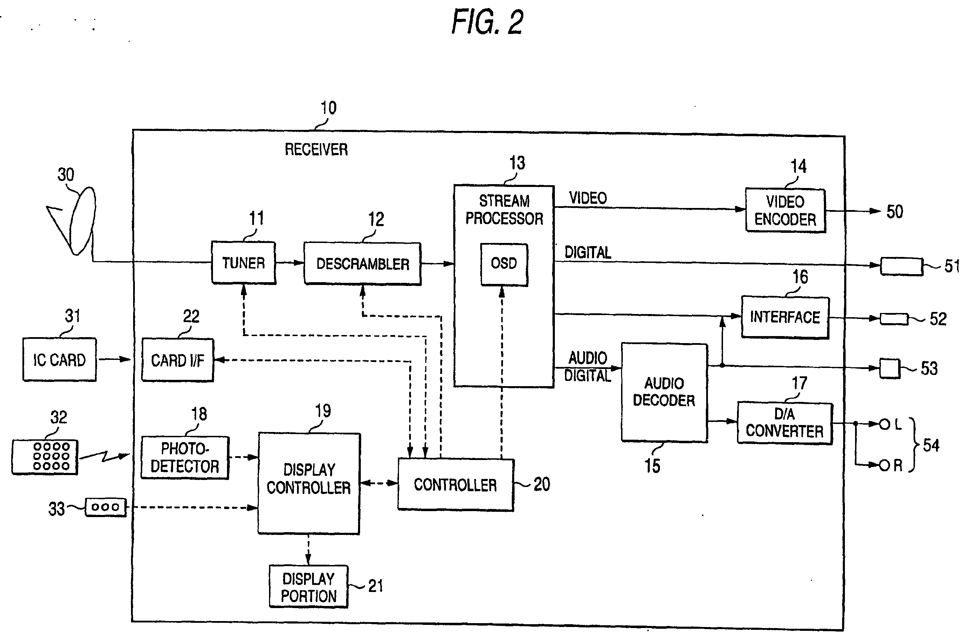

Fig. 2 is a diagram showing the construction of an embodiment of a receiver to which the present invention is applied. Digital data received from an antenna 30 are input to a tuner 11 of the receiver 10. The tuner 11 extracts data on a program indicated by a user and outputs the data to a descrambler 12.

When input data are scrambled and when the scramble is allowed to be descrambled (for example, a regular subscription is taken out, and thus a descramble key is kept), the descrambler 12 descrambles the scramble and outputs the data to a stream processor 13. The stream processor 13 outputs video data of the input data to a video encoder 14, and also outputs audio data of the input data to an audio decoder 15. When the video data are encoded data, the stream processor 13 subjects the input video data to the decode processing corresponding to the encode system, further generates OSD (On Screen Display) data if occasion demands, superposes the OSD data on the decoded video data and then outputs the data thus obtained.

When the video encoder 14 outputs input video data to a television receiver 50, the video encoder 14 subjects the encode processing meeting the television receiver 50, for example, the encode processing based on the NTSC (National Television System Committee) system to the input video data, and then outputs the data to the television receiver 50. The video data processed by the stream processor 13 are also output to a component 51 treating digital data.

The audio decoder 15 subjects the input audio data to the decode processing corresponding to the encode system of the audio data. The audio data which have been subjected to the decode processing by the audio decoder 15 are output to an interface 16. The interface 16 is connected to IEEE1394 cable 52, for example, and outputs the audio data from the audio decoder 15 to a device connected to the IEEE1394 cable 52.

The audio data output from the audio decoder 15 are also output to other devices through an optical cable 53. Further, the audio data output from the audio decoder 15 are converted to analog data by a D/A (Digital/Analog) converter 17, and output to a speaker 54.

The tuner 11 extracts the data of a program indicated by the user. The user tunes a desired program by using a remote controller 32 or switch 33, and outputs an instruction. The switch 33 is provided on the side surface of the receiver 10, and it is designed to output substantially the same instruction as the remote controller 32. The remote controller 32 receives/transmits data from/to the receiver 10 by infrared rays, for example.

The data corresponding to an instruction which the user makes by using the remote controller 32 are received by a photodetector 18 of the receiver 10. The data received by the photodetector 18 or the data corresponding to the instruction based on the switch 33 are output to a display controller 19. The display controller 19 outputs the data from the photodetector 18 or the data from the switch 33 to a controller 20 if occasion demands, and also performs the display control of a display portion 21 according to the input data.

The display portion 21 is provided on the side surface of the receiver 10, and it makes a display to make the user know that the processing corresponding to the user's instruction is executed or makes a display for information to be supplied to the user.

When a subscription for audience of a pay program is taken out, data supplied from a partner with which the subscription is taken out are stored in an IC card 31. This data is a descrambling key for descrambling the scramble or the like. The IC card 31 is mounted in a card I/F (Interface) 22 so that data recorded are read out. The data thus read out are output to the controller 20.

On the basis of the input data, the controller 20 outputs an indication of a program to be extracted to the tuner 11, and also supplies the descrambling key to the descrambler 12.

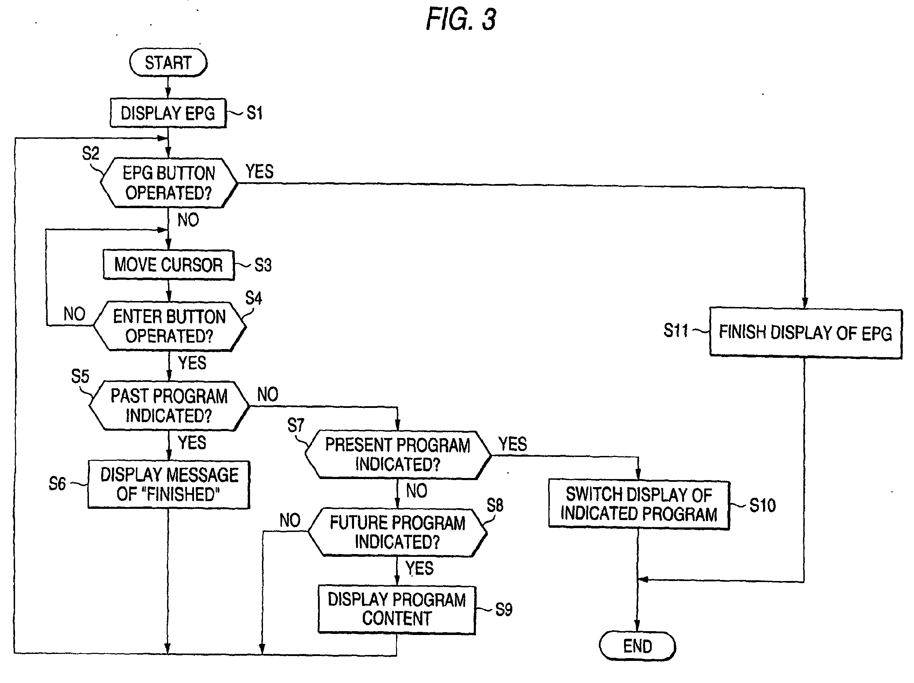

Next, the operation of the receiver 10 when a user refers to EPG to select a desired program or program picture recording of a desired program will be described with reference to a flowchart of Fig. 3. In step S1, the receiver 10 displays EPG on the television receiver 50, for example. The display of EPG is carried out on the basis of an instruction from a user. The user instructs the display of EPG by operating a remote controller 32 or switch 33 when a predetermined channel program is displayed or the like. In this case, the following description will be made on the assumption that an EPG button (not shown) for instructing switching the display of EPG to the remote controller 32 is provided.

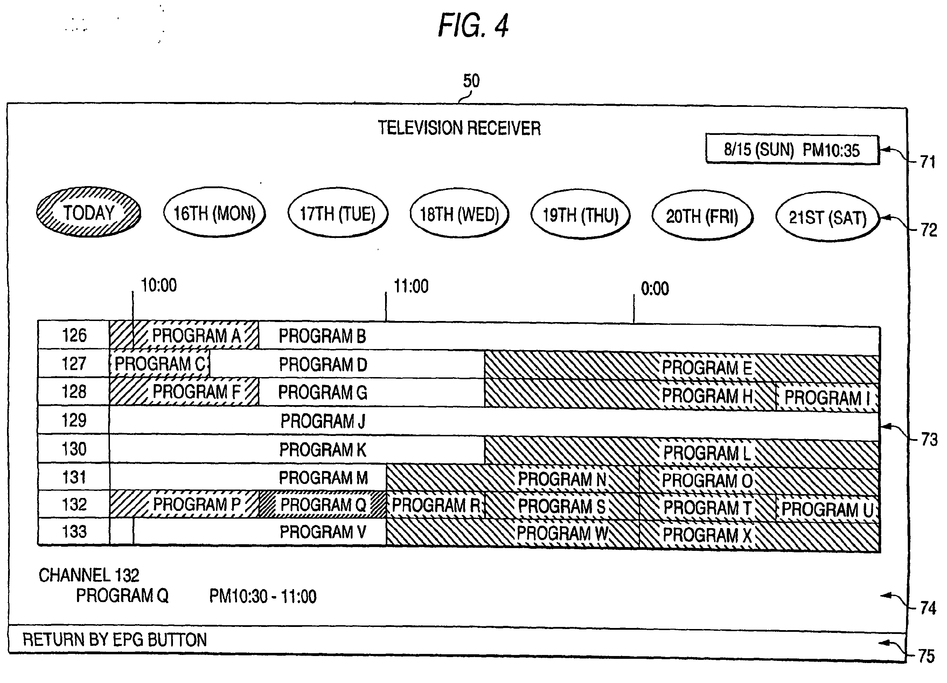

Fig. 4 shows an example of EPG displayed on the television receiver 50 by operating the EPG button provided to the remote controller 32 by the user in step S1. A present date and hour display portion 71 for displaying the present date and hour is provided at the upper side of the screen of the television receiver 50. A day-of-week display portion 72 for displaying the present day of the week is provided at the lower side of the present date and hour display portion 71. Further, a program-table display portion 73 is provided at the lower side of the day-of-week display portion 72.

Each day of the week displayed on the day-of-week display portion 72 is set as a button, and the programs of the day of the week corresponding to a button operated are displayed on the program-table display portion 73. In the display example shown in Fig. 4, programs within three hours containing the present time on a selected day of the week are displayed in the corresponding time frames every channel (numerals displayed at the left side of the program-table display portion 73) on the program-table display portion 73.

The program-table display portion 73 displays a program table so that past programs with respect to the present time (programs that have been already broadcasted), programs being currently broadcasted and future programs with respect to the present time (programs that will be broadcasted) are discriminated from one another at a glance. In the display example of Fig. 4, the past programs and the future programs are displayed with oblique lines. Different oblique lines are affixed to the past programs and the future programs. In Fig. 4, they are discriminated by the oblique lines, however, they may be discriminated by colors.

When the discrimination is made by colors, the past programs, the present programs and the future programs are displayed with different colors. The colors may be set to user's favorable colors.

A cursor moving within the displayed program table is also displayed on the program-table display portion 73. A program frame at which the cursor is located is displayed so as to be discriminated from the other program frames. For example, when the past programs, the present programs and the future programs are displayed so as to be discriminated from one another by colors, a program at which the cursor is located is displayed with a further different color. In the display example of Fig. 4, the cursor is located on a program Q of a channel 132. The cursor is operated by using the remote controller 32.

As described above, the past programs , the present programs and the future programs are displayed so as to be discriminated from one another at a glance, thereby preventing occurrence of such a situation that a past program which has been already broadcasted is selected as a program which the user wants to watch/listen to or a program being currently broadcasted is selected as a program for which the picture recording is programmed.

If the time elapses while the program table displayed on the program-table display portion 73 is kept under display state, the program table is shifted to the left side, for example, at 11 o'clock in the display example shown in Fig. 4, and it is renewed to a program table from 11 o'clock to 14 o'clock. With this operation, the latest program table containing the current time is displayed at all times. Further, there can be prevented such a case that past programs are continued to be displayed.

The information of a program at which the cursor is located in the program-table display portion 73 is displayed on the program information display portion 74. A channel number, a program title, a broadcast time, a program content, etc. are provided as the information of the program to be displayed. An operation guide display portion 75 is provided at the lower side of the program information display portion 74. The operation guide display portion 75 displays the information on the operations. For example, it shows a user that the display is returned (switched) to a previous state if the user operates the EPG button provided to the remote controller 32.

When EPG (program table) as described above is displayed on the television receiver 50 in step S1, it is judged in step S2 whether the EPG button is operated or not. If it is judged in step S2 that the EPG button is not operated, the process goes to step S3 to move the cursor in conformity with the user's operation of the remote controller 32. Then, it is judged in step S4 whether the enter button is operated or not. The enter button is also provided to the remote controller 32, and it is a button to be operated when the user wants to watch/listen to a program at which the cursor is located or the user wants to program the recording of the program.

The processing of the steps S3 and S4 is repetitively carried out until it is judged in step S4 that the enter button is operated. If it is judged that the enter button is operated, the processing goes to step S5. It is judged in step S5 whether the program at which the cursor is located when the enter button is operated is a past program or not. Since past programs, present programs and future programs are displayed with different colors as described above, they are discriminated from one another at a glance. However, there may be such a case that a user erroneously selects (indicates) a past program which has been already broadcasted. In order to support such a situation, the processing of the steps S5 and S6 is provided.

If it is judged in step S5 that a past program is indicated, the processing goes to step S6 in which a message to make the user recognize that the indicated program has been already broadcasted and thus cannot be selected like "broadcast has been finished" is displayed on the screen of the television receiver 50. This message may be displayed so as to be overlapped with the display frame shown in Fig. 4 or it may be displayed after the display frame is switched.

If the message in the step S6 is displayed for only a predetermined time or if the user carries out an operation of indicating user's recognition that the program cannot be selected, the processing returns to step S2 to repeat the processing of the subsequent steps.

On the other hand, if it is judged in step S5 that no past program is indicated, the processing goes to step S7 to judge whether a present program is indicated or not. If it is judged that no present program is indicated, the processing goes to step S8 to judge whether a future program is indicated or not. If it is judged in step S8 that a future program is indicated, the processing goes to step S9.

The judgment of the indication of a future program makes it possible to judge that the user programs the recording of the indicated program, and thus the content of the indicated program is first displayed in step S9. This display may be made on the program information display portion 74 , or the display frame may be switched to another for displaying detailed information. When the user wants to program the program recording by referring to the program information thus displayed, the user executes a predetermined operation, for example, an operation of operating a picture-recording programming button provided to the remote controller 32 or operating a picture-recording programming button displayed on the screen, whereby the picture-recording is programmed on the basis of the operation.

On the other hand, if it is judged in step S8 that no future program is indicated, the processing returns to the step S2 to repeat the processing of the subsequent steps. If it is judged in step S8 that the program is not any future program, it is judged that the program concerned is not contained in any time of the past, the present and the future. Such a program is processed as a program having no time information. In other words, since the user can do neither watching/listening of the program concerned nor programming of the recording of the program concerned, no special processing is carried out, and the display state of the display frame as shown in Fig. 4 is kept (that is, the processing returns to step S2 to repeat the processing of the subsequent steps).

On the other hand, if it is judged in step S7 that a present program is indicated, the processing goes to step S10. In step S10, the display is switched to the program thus indicated. The indication of the present program makes it possible to judge that the user wants to watch/listen to the program concerned, and thus the display is switched from the display state of EPG as shown in Fig. 4 to the program indicated.

On the other hand, if it is judged in step S2 that the EPG button is operated, that is, it is judged that the user instructs to finish the display of EPG, the processing goes to step S11 to finish the display of EPG as shown in Fig. 4. When the display of EPG is finished, the display of the television receiver 50 is switched to an original program (a program of a channel displayed before EPG is displayed).

As described above, the past, present and future programs are displayed with different colors so as to be discriminated from one another in the EPG display, and also the processing is executed in accordance with the broadcast time of a selected program, whereby the user can be prevented from executing an operation that cannot be instructed, and also the user can easily carry out a desired operation.

The series of processing as described above can be executed by hardware, however, it may be executed by software. When the series of processing is executed by software, the program constituting the software may be installed from a recording medium into a computer installed in a special-purpose hardware or a general personal computer which can execute various functions by installing various programs therein.

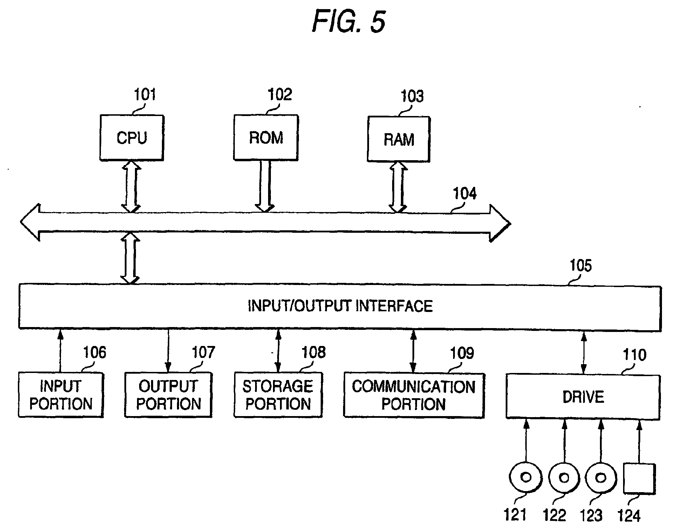

As shown in Fig. 5, this recording medium is constructed by not only a package medium comprising a magnetic disc 121 (containing a floppy disk), an optical disc 122 (containing CD-ROM (Compact Disc-Read Only Memory), DVD (Digital Versatile Disk)), a magnetooptical disc 123 (containing MD (Mini-Disk)), a semiconductor memory 124 or the like that has the program recorded therein and is distributed to supply the program to users separately from a computer, but also a hard disc containing ROM 102 or a storage portion 108 that has the program recorded therein and is supplied to users under the state that it is installed in a computer in advance.

In this specification, the step describing the program to be supplied through the medium contains not only the processing that is carried out in time series according to the described order, but also the processing that is not carried out in time series, but in parallel or individually.

In this specification, the system represents the overall device constructed by plural devices.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information processing device for controlling the display of an electronic program guide, comprising processing means (11, 12, 13, 14) for selectively producing data for display on a display device (50) representing an electronic program guide and programs included in the guide, and a user control (32, 33, 18, 19, 20) for selecting the program guide and programs in the guide, **characterised in that** the processing means is arranged so that a past program whose broadcast time is prior to a present time, a present program whose broadcast time contains the present time and a future program whose broadcast time is subsequent to the present time are controlled to be displayed with different colours and wherein if a user selects a past program (S5), an indication is displayed (S6) that the program has been broadcast.

2. The information processing device as claimed in claim 1, wherein a program indicated by a user is displayed with a further different colour.

3. The information processing device as claimed in claim 1 or 2, wherein the program indicated by the user is a program at which a cursor is located.

4. The information processing device as claimed in claim 1, 2 or 3 wherein the colour is set to a user's favourable colour.

5. The information processing device as claimed in claim 1, 2, 3 or 4 wherein the display of electronic program guide (EPG) is controlled so that the latest EPG containing the present time is displayed.

6. The information processing device as claimed in any preceding claim wherein, if the user selects a future program (S8), further information relating to the program is displayed (S9).

7. A device according to any preceding claim further comprising a display device (50).

8. A device according to any preceding claim wherein the processing means (11, 12, 13, 14) includes a tuner (11) a processor (13) operable to output video data and a video encoder (14) for supplying a video signal for display.

9. A method of controlling the display of an electronic program guide, **characterised in that** a past program whose broadcast time is prior to a present time, a present program whose broadcast time contains the present time and a future program whose broadcast time is subsequent to the present time are controlled to be displayed with different colours, and in which if the user selects a past program (S5), an indication is displayed (S6) that the program has been broadcast.

10. The information processing method as claimed in claim 9, wherein a program indicated by a user is displayed with a further different colour.

11. The information processing method as claimed in claim 9 or 10, wherein the program indicated by the user is a program at which a cursor is located.

12. The information processing method as claimed in claim 9, 10 or 11 wherein the colour is set to a user's favourable colour.

13. The information processing method as claimed in claim 9, 10, 11 or 12 wherein the display of the electronic program guide (EPG) is controlled so that the latest EPG containing the present time is displayed.

14. The information processing method as claimed in any one of claims 9 to 13 wherein, if the user selects a future program (S8), further information relating to the program is displayed (S9).

15. A recording medium on which is recorded a program, which, when run on a suitable processing device, causes the device to implement of method of any one of claims 9 to 14.

## Patentansprüche

1. Informationsverarbeitungsvorrichtung zur Steuerung der Anzeige eines elektronischen Programmführers,
mit einer Verarbeitungseinrichtung (11, 12, 13, 14) zum selektiven Erzeugen von Daten auf einer Anzeigevorrichtung (50), die einen elektronischen Programmführer sowie in dem Führer enthaltene Programme repräsentieren, und
mit einer Benutzersteuerung (32, 33, 18, 19, 20) zum Auswählen des Programmführers und von Programmen in dem Führer,
**dadurch gekennzeichnet,**
**daß** die Verarbeitungseinrichtung so angeordnet ist, daß ein vergangenes Programm, dessen Sendezeit vor der laufenden Zeit liegt, ein laufendes Programm, dessen Sendezeit die laufende Zeit enthält, und ein zukünftiges Programm, dessen Sendezeit auf die laufende Zeit folgt, so gesteuert werden, daß sie mit unterschiedlichen Farben angezeigt werden, wobei für den Fall, daß der Benutzer ein vergangenes Programm auswählt (S5), eine Angabe, daß das Programm gesendet wurde, angezeigt wird (S6).

2. Informationsverarbeitungsvorrichtung nach Anspruch 1, bei der ein von einem Benutzer indiziertes Programm in einer weiteren unterschiedlichen Farbe angezeigt wird.

3. Informationsverarbeitungsvorrichtung nach Anspruch 1 oder 2, bei der ein von dem Benutzer indiziertes Programm ein Programm ist, auf das ein Cursor gesetzt ist.

4. Informationsverarbeitungsvorrichtung nach Anspruch 1, 2 oder 3, bei der die Farbe auf eine Lieblingsfarbe des Benutzers eingestellt wird.

5. Informationsverarbeitungsvorrichtung nach Anspruch 1, 2, 3 oder 4, bei der die Anzeige des elektronischen Programmführers (EPG) so gesteuert wird, daß der neueste EPG angezeigt wird, der die laufende Zeit enthält.

6. Informationsverarbeitungsvorrichtung nach einem der vorhergehenden Ansprüche, bei der für den Fall, daß der Benutzer ein zukünftiges Programm auswählt (S8), weitere Informationen angezeigt werden (S9), die sich auf dieses Programm beziehen.

7. Vorrichtung nach einem der vorhergehenden Ansprüche, die außerdem eine Anzeigevorrichtung (50) aufweist.

8. Vorrichtung nach einem der vorhergehenden Ansprüche, bei der die Verarbeitungseinrichtung (11, 12, 13, 14) einen Tuner (11) und einen Prozessor (13) umfaßt, der so betreibbar ist, daß er Videodaten ausgibt, sowie einen Videokodierer (14) zur Lieferung eines Videosignals für die Anzeige.

9. Verfahren zum Steuern Anzeige eines elektronischen Programmführers,
**dadurch gekennzeichnet,**
**daß** ein vergangenes Programm, dessen Sendezeit vor der laufenden Zeit liegt, ein laufendes Programm dessen Sendezeit die laufende Zeit enthält, und ein zukünftiges Programm, dessen Sendezeit auf die laufende Zeit folgt, so gesteuert werden, daß sie mit unterschiedlichen Farben angezeigt werden, wobei für den Fall, daß der Benutzer ein vergangenes Programm auswählt (S5), eine Angabe, daß das Programm gesendet wurde, angezeigt wird (S6).

10. Informationsverarbeitungsverfahren nach Anspruch 9, bei dem ein von einem Benutzer indiziertes Programm in einer weiteren unterschiedlichen Farbe angezeigt wird.

11. Informationsverarbeitungsverfahren nach Anspruch 9 oder 10, bei dem das von dem Benutzer indizierte Programm ein Programm ist, auf das ein Cursor gesetzt ist.

12. Informationsverarbeitungsverfahren nach Anspruch 9, 10 oder 11, bei dem die Farbe auf eine Lieblingsfarbe des Benutzers eingestellt wird.

13. Informationsverarbeitungsverfahren nach Anspruch 9, 10, 11 oder 2, bei dem die Anzeige des elektronischen Programmführers (EPG) so gesteuert wird, daß der neueste EPG angezeigt wird, der die laufende Zeit enthält.

14. Informationsverarbeitungsverfahren nach einem der Ansprüche 9 bis 13, bei dem für den Fall, daß der Benutzer ein zukünftiges Programm auswählt (S8), weitere Informationen angezeigt werden (S9), die sich auf dieses Programm beziehen.

15. Aufzeichnungsmedium, auf dem ein Programm aufgezeichnet ist, das, wenn es auf einer geeigneten Verarbeitungsvorrichtung läuft, die Vorrichtung veranlaßt, das Verfahren nach einem der Ansprüche 9 bis 13 auszuführen.

## Revendications

1. Dispositif de traitement de l'information pour commander l'affichage d'un guide de programme électronique, comprenant un moyen de traitement (11, 12, 13, 14) pour générer sélectivement des données pour l'affichage sur un dispositif d'affichage (50) représentant un guide de programme électronique et des programmes inclus dans le guide et une commande d'utilisateur (32, 33, 18, 19, 20) pour choisir le guide de programme et les programmes du guide, **caractérisé en ce que** le moyen de traitement est conçu de façon à commander l'affichage en des couleurs différentes d'un programme passé dont l'heure de diffusion est antérieure à l'heure actuelle, d'un programme actuel dont la durée de diffusion contient l'heure actuelle et d'un programme futur dont l'heure de diffusion est postérieure à l'heure actuelle et dans lequel si un utilisateur choisit un programme passé (S5), une mention est affichée (S6) indiquant que le programme a déjà été diffusé.

2. Dispositif de traitement de l'information selon la revendication 1, dans lequel un programme désigné par un utilisateur est affiché avec une couleur encore différente.

3. Dispositif de traitement de l'information selon la revendication 1 ou 2, dans lequel le programme désigné par l'utilisateur est un programme sur lequel un curseur est placé.

4. Dispositif de traitement de l'information selon la revendication 1, 2 ou 3 dans lequel la couleur choisie est une couleur agréable à un utilisateur.

5. Dispositif de traitement de l'information selon la revendication 1, 2, 3 ou 4 dans lequel l'affichage du guide de programme électronique (GPE) est commandé de façon que le dernier GPE contenant l'heure actuelle soit affiché.

6. Dispositif de traitement de l'information, selon l'une quelconque des revendications précédentes dans lequel, si l'utilisateur choisit un programme futur (S8), une information supplémentaire concemant le programme est affichée (S9).

7. Dispositif selon l'une quelconque des revendications précédentes comprenant de plus un dispositif d'affichage (50).

8. Dispositif selon l'une quelconque des revendications précédentes dans lequel le moyen de traitement (11, 12, 13, 14) comprend un tuner (11) un processeur (13) pouvant émettre des signaux vidéo et un encodeur vidéo (14) pour fournir un signal vidéo pour l'affichage.

9. Procédé de commande de l'affichage d'un guide de programme électronique, **caractérisé en ce qu'**on commande l'affichage en des couleurs différentes d'un programme passé dont l'heure de diffusion est antérieure à l'heure actuelle, d'un programme actuel dont la durée de diffusion contient l'heure actuelle et d'un programme futur dont l'heure de diffusion est postérieure à l'heure actuelle et **en ce que** si l'utilisateur choisit un programme passé (S5), une mention est affichée (S6) indiquant que le programme a déjà été diffusé.

10. Procédé de traitement de l'information selon la revendication 9, dans lequel un programme désigné par un utilisateur est affiché avec une couleur encore différente.

11. Procédé de traitement de l'information selon la revendication 9 ou 10, dans lequel le programme désigné par l'utilisateur est un programme sur lequel un curseur est placé.

12. Procédé de traitement de l'information selon la revendication 9, 10 ou 11 dans lequel la couleur choisie est une couleur agréable à un utilisateur.

13. Procédé de traitement de l'information selon la revendication 9, 10, 11 ou 12 dans lequel l'affichage du guide de programme électronique (GPE) est commandé de façon que le demier GPE contenant l'heure actuelle soit affiché.

14. Procédé de traitement de l'information selon l'une quelconque des revendications 9 à 13 dans lequel, si l'utilisateur choisit un programme futur (S8), une information supplémentaire concernant le programme est affichée (S9).

15. Support d'enregistrement sur lequel est enregistré un programme qui, lorsqu'il est exécuté sur un dispositif de traitement approprié, fait mettre en oeuvre au dispositif le procédé selon l'une quelconque des revendications 9 à 14.
